# EUROPEAN PATENT SPECIFICATION

(11) **EP 4 648 963 B1**
(45) Date of publication and mention of the grant of the patent: **18.11.2026**
(21) Application number: 23848220.2
(22) Date of filing: 21.12.2023
(51) Int. Cl.: B29D 5/10

(54) **SYSTEMS AND METHODS FOR FORMING A ZIPPER**
SYSTEME UND VERFAHREN ZUR HERSTELLUNG EINES REISSVERSCHLUSSES
SYSTÈMES ET PROCÉDÉS DE FORMATION D'UNE FERMETURE À GLISSIÈRE

(30) Priority: 11.01.2023 US 202363479371 P
(43) Date of publication of application: 19.11.2025
(73) Proprietor: Illinois Tool Works Inc., Glenview IL 60025 (US)
(72) Inventor: PLOURDE, Eric, Glenview, IL 60025 (US); JOHNSON, Marion, Glenview, IL 60025 (US); WIHLBORG, Lars, Glenview, IL 60025 (US); LUDWIG, Christopher, Glenview, IL 60025 (US)
(74) Representative: HGF
(86) International application number: PCT/US2023/085304
(87) International publication number: WO 2024/151407

(56) References cited:
- EP-B1- 0 814 680
- US-A1- 2020 231 341

## Description

### BACKGROUND

### Technical Field.

The subject matter described herein relates to systems and methods for forming a zipper of a package (such a pouch, bag, or the like).

### Discussion of Art.

Certain packages include a device for reclosing the package such as a zipper, or other mating feature that can reclose the package. Certain zippers have a tactility, which is configured to provide a noticeable feel to an individual. Known tactile zippers are typically formed through a cast or post embossing process with heated rollers. However, it has been found that such zippers may not exhibit sufficient opening or closing forces. EP 0 814 680 B1 relates to a closure member for a reclosable thermoplastic bag wherein the closure member creates a clicking noise when the closure member is being opened or closed and to a reclosable thermoplastic bag having the closure member. US 2020/231341 A1 relates to a storage bag with features that facilitate sealing and unsealing the bag, as well as a storage bag that includes features that improve gripping of the bag by a user

### BRIEF DESCRIPTION

A need exists for an improved method of forming a zipper assembly. Further, a need exists for a zipper assembly having tactility, as well as desired opening force.

With those needs in mind, certain examples of the present disclosure provide a method including obtaining an elongated zipper assembly having a panel side and an opposite interlocking side. The panel side is configured to be coupled with a panel of an enclosure. The interlocking side has an interlocking material layer extending away from the interlocking side. The method also includes vibrating the zipper assembly, and cutting into the interlocking material layer of the zipper assembly while the zipper assembly is vibrated to form interlocking elements from the interlocking material layer. The interlocking elements are configured to repeatedly couple with each other and decouple from each other while coupled with the enclosure.

In at least one example, the vibrating the zipper assembly includes moving the zipper assembly back-and-forth between different positions at an ultrasonic frequency.

In at least one example, the cutting into the interlocking material includes rotating a rotary blade device to cut into the interlocking material layer.

In at least one example, the cutting into the interlocking material includes cutting into the interlocking material to different depths at different locations in the interlocking material.

In at least one example, cutting into the interlocking material forms spatial gaps between the interlocking elements. The spatial gaps can be a common size throughout the interlocking material. Optionally, the spatial gaps are different sizes in different locations of the interlocking material.

In at least one example, the method also includes heating the interlocking material during cutting of the interlocking material.

Certain examples of the present disclosure provide a method including obtaining an elongated zipper assembly having a panel side and an opposite interlocking side. The panel side is configured to be coupled with a panel of an enclosure. The interlocking side has an interlocking material layer extending away from the interlocking side. The method includes cutting into the interlocking material layer of the zipper assembly using a rotary blade device while the zipper assembly is vibrated to form interlocking elements from the interlocking material layer. The interlocking elements are configured to repeatedly couple with each other and decouple from each other while coupled with the enclosure.

Certain examples of the present disclosure provide a zipper assembly including an elongated flange having a panel side and an opposite interlocking side. The panel side is configured to be coupled with a panel of an enclosure. Elongated interlocking elements are coupled with the interlocking side of the flange. The interlocking elements protrude away from the interlocking side to rounded bulbous heads deformed during ultrasonic cutting of the interlocking elements.

In at least one example, the heads of the interlocking elements are rounded. In at least one example, the heads of the interlocking elements are arranged in a two-dimensional array on the flange. In at least one example, the heads of the interlocking elements also are thermally deformed during the ultrasonic cutting. In at least one example, different sets of the interlocking elements have one or more of different heights or different separation distances.

### BRIEF DESCRIPTION OF THE DRAWINGS

The inventive subject matter may be understood from reading the following description of non-limiting embodiments, with reference to the attached drawings, wherein below:
Figure 1 illustrates a schematic diagram of a system for forming a package, according to an embodiment of the present disclosure.
Figure 2 illustrates a front view of a package, according to an embodiment of the present disclosure.
Figure 3 illustrates a cross-sectional view of a zipper assembly of the package along line 3-3 of Figure 2.
Figure 4 illustrates a side view of a rotary blade device, according to an embodiment of the present disclosure.
Figure 5 illustrates a side view of initially formed interlocking elements, according to an embodiment of the present disclosure.
Figure 6 illustrates a side view of fully formed interlocking elements, according to an embodiment of the present disclosure.
Figure 7 illustrates a flow chart of a method, according to an embodiment of the present disclosure.
Figure 8 illustrates a first profile view of a zipper assembly, according to an example of the present disclosure.
Figure 9 illustrates a second profile view of the zipper assembly of Figure 8.

### DETAILED DESCRIPTION

Certain examples of the present disclosure provide a system and a method for forming a package having a zipper. A forming unit is configured to cut and deform a zipper through rotary ultrasonic forming, thereby providing tactility to the zipper assembly.

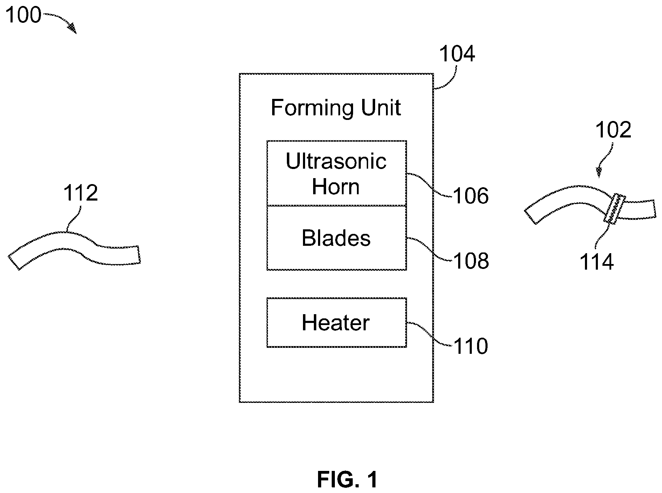

Figure 1 illustrates a schematic diagram of a system 100 for forming a package 102, according to an embodiment of the present disclosure. The system 100 includes a forming unit 104 including an ultrasonic horn 106. One or more blades 108 are coupled to the ultrasonic horn. The forming unit 104 can also include a heater 110. Optionally, the heater 110 can be separate and distinct from the forming unit 104.

In operation, the forming unit 104 receives a web 112, such as a film, formed of a material. The web 112 can be formed of polyethylene, PET, LDPE, Nylon, and/or the like. The web 112 can be formed of a plurality of layers coupled together, such as via lamination, heat sealing, extrusion, and/or the like. In at least one embodiment, the web 112 is provided as a flexible sheet. In at least one example, the web 112 can be a fully formed package without a zipper, for example. As another example, the web 112 can be material that is to be formed into the package 102.

The forming unit receives the web 112 and operates to provide (such as secure, connect, apply, and/or the like) an elongated zipper assembly 114 on the web 112. The forming unit 104 vibrates the zipper assembly 114, such as via the ultrasonic horn 106, and the blades 108 cut into interlocking material of the zipper assembly 114 as the zipper assembly 114 is being vibrated, thereby forming interlocking elements from the interlocking material layer. The interlocking elements are configured to repeatedly couple with each other and decouple from each other while coupled with the enclosure (for example, the package 102).

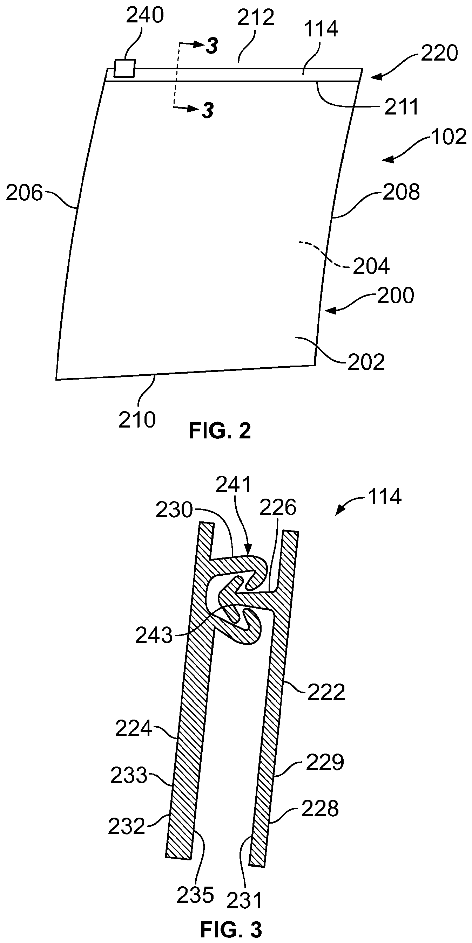

Figure 2 illustrates a front view of the package 102 (such as recloseable bag), according to an embodiment of the present disclosure. The package 102 includes a container 200 including a front wall 202 that is coextensive with a rear wall 204. The front wall 202 and the rear wall 204 can be joined to each other by side seals 206, 208, and a bottom seal 210 (or optionally a fold). Upper edges 211 define a mouth 212, which is recloseable by the zipper assembly 114.

The container 200 is an example of an enclosure that can be formed from the web 112, as shown and described in Figure 1. The container 200 can be formed of a polymeric material. Optionally, the container 200 can be formed of a biodegradable material. For example, the container 200 can be formed of paper, which may or may not be coated.

Figure 3 illustrates a cross-sectional view of the zipper assembly 114 of the package 102 along line 3-3 of Figure 2. The zipper assembly 220 includes a first profile 222 and a second profile 224 opposite from the first profile 222. The first profile 222 and the second profile 224 include cooperating interlocking elements. In particular, the first profile 222 includes first or male interlocking elements 226 and a first flange 228 (such as extending from or otherwise coupled to the male interlocking elements 226), and the second profile 224 includes second or female interlocking elements 230 and a second flange 232 (such as extending from or otherwise coupled to the female interlocking element 230). It is to be understood that the terms "first," "second," and the like are merely used to denote a number of items. For example, the female interlocking element 230 can be considered the first interlocking element, and the male interlocking element 226 can be considered the second interlocking element.

Referring to Figures 2 and 3, the first profile 222 is sealed to the front wall 202 while second profile 224 is sealed to the rear wall 204. In the closed or interlocked position, the male interlocking elements 226 are received and engaged with the female interlocking elements 230. In the open position, the male interlocking elements 226 and the female interlocking elements 230 are free of engagement with each other.

In at least one embodiment, a slider 240 may also be used in relation to the zipper assembly 114. That is, the slider 240 can be operatively coupled to the zipper assembly 114. The slider 240 can be moved in an opening direction to separate the male interlocking elements 226 from the female interlocking elements 230. Conversely, the slider can be moved in a closing direction to interlock the male interlocking elements 226 and the female interlocking elements 230. Optionally, the package 102 may not include the slider 240.

Each of the first flange 228 and the second flange 232 is elongated. The first flange 228 includes a panel side 229 and an opposite interlocking side 231. Similarly, the second flange 232 includes a panel side 233 and an opposite interlocking side 235. The panel sides 229 and 233 are configured to be coupled to a panel of an enclosure, such as a web or the like of the container 200.

As noted, the zipper assembly 114 also includes elongated interlocking elements, such as the male interlocking elements 226, coupled with the interlocking side 231 of the flange 228. As shown, the interlocking elements protrude away from the interlocking side 231.

Similarly, the zipper assembly 114 also includes elongated interlocking elements, such as the female interlocking elements 230, coupled with the interlocking side 235 of the flange 232. As shown, the interlocking elements protrude away from the interlocking side 235.

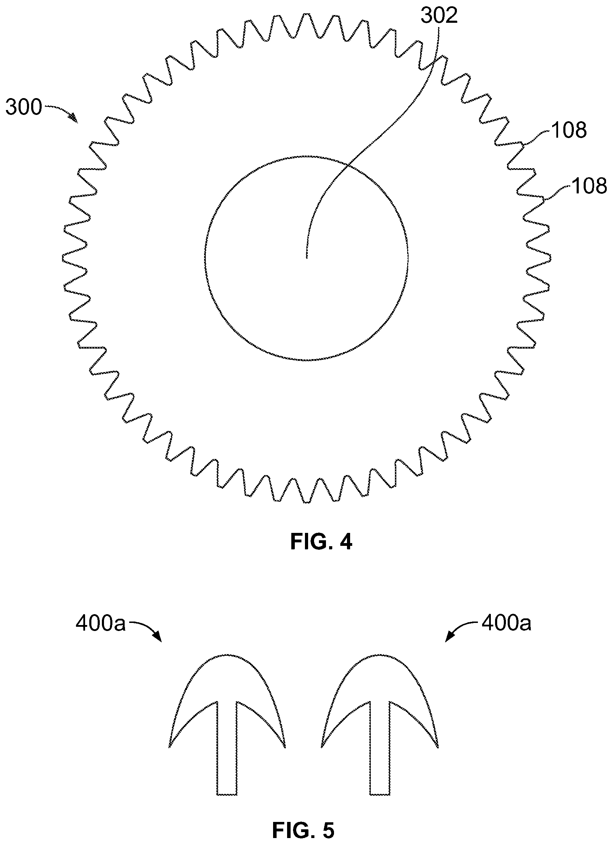

Figure 4 illustrates a side view of a rotary blade device 300, according to an embodiment of the present disclosure. The rotary blade device 300 includes the blades 108 around a circumference thereof. Referring to Figures 1-4, the blades 108 are configured to be coupled to a rotary device (such as a rotary motor having an axle coupled to the rotary blade device 300) that rotates the blades 108 in relation to a central axis 302. The blades 108 may be directly coupled to the ultrasonic horn 106. Optionally, the blades 108 can be separately secured to the ultrasonic horn 106. The blades 108 are configured to be rotated over surfaces of the zipper assembly 114. The blades 108 cut and deform the zipper assembly 114 via rotary ultrasonics, thereby providing the zipper assembly 114 with tactility.

The blades 108 can be wider, narrower, more rounded, etc. other than shown. Further, there different blades 108 can have different heights, widths, pitches, and the like in relation to other blades 108. For example, different blades 108 or sets of blades can be at varying depths to provide a desired tactility to the zipper assembly 114. Additionally, the ultrasonic horn 106 can be operated at different frequencies to provide a desired tactility to the zipper assembly 114.

During a forming operation, the heater unit 110, such as one or more heating coils, applies heat to the zipper assembly 114 during the cutting and deformation process. The temperature of the heat is configured to melt the material (such as plastic) of the zipper assembly 114. The exerted heat allows the blades 108 to more easily cut into the zipper assembly 114, thereby increasing the tactility of the zipper assembly 114.

Figure 5 illustrates a side view of initially formed interlocking elements 400a, according to an embodiment of the present disclosure. The interlocking elements 400a can be male interlocking elements. The initially formed interlocking elements 400a have not been operated on by the forming unit 104 shown in Figure 1. The initially formed interlocking elements 400a can be sized and shaped the same.

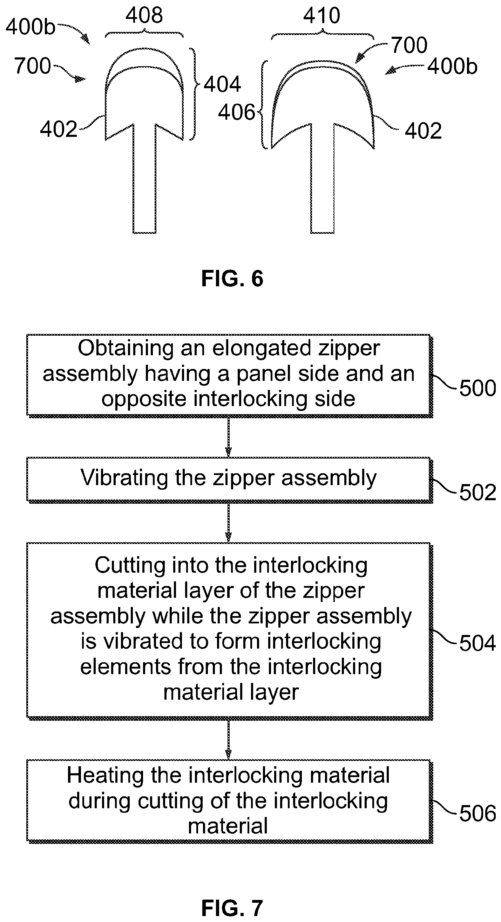

Figure 6 illustrates a side view of fully formed interlocking elements 400b, according to an embodiment of the present disclosure. As shown, after the forming unit 104 operates to vibrate (through the ultrasonic horn 106). cut (through the blades 108), and simultaneously heat (through the heater 110) the interlocking elements 400b, varying degrees of material can extend from heads 402 of the interlocking elements 400b. For example, a depth or height 404 of a head 402 can differ from a depth or height 406 of another head 402. Similarly, a width 408 of a head 402 can differ form a width 410 of another head 402. As such, the vibrating, cutting, and heating alters the shapes of the interlocking elements 400b. The vibrational cutting and heating deforms the interlocking elements 400b to provide tactility thereto. The interlocking elements 400b include deformations 700 formed through the vibrating, cutting, and heating.

Figure 7 illustrates a flow chart of a method, according to an embodiment of the present disclosure. Referring to Figures 1-7, the method includes obtaining, at 500, an elongated zipper assembly 114 having a panel side (for example, panel side 229 or 233 shown in Figure 3) and an opposite interlocking side (for example, interlocking side 231 or 235 shown in Figure 3). The panel side is configured to be coupled with a panel (such as the web 112 shown in Figure 1) of an enclosure (such as the package 102 shown in Figures 1 and 2). The interlocking side has an interlocking material layer (for example, interlocking material layer 241 or 243 shown in Figure 3) extending away from the interlocking side.

The method also includes vibrating, at 502, the zipper assembly 114. For example, the ultrasonic horn 106 generates ultrasonic energy that vibrates the zipper assembly 114.

The method also includes cutting, at 504, into the interlocking material layer of the zipper assembly 114 while the zipper assembly 114 is vibrated to form interlocking elements (such as the male interlocking elements 226 and the female interlocking elements 230 having deformations, such as shown in Figure 6, formed through the vibrating and cutting) from the interlocking material layer. The interlocking elements are configured to repeatedly couple with each other and decouple from each other while coupled with the enclosure. The vibrating 502 can include moving the zipper assembly 114 back-and-forth between different positions in relation to the ultrasonic horn 106 and/or the blades 108 at an ultrasonic frequency (such as greater than 20 kHz).

Optionally, instead of cutting, the interlocking material can be deformed through crushing, pressing, or the like. In at least one example, instead of a cutter, the forming unit can include a press coupled to a motor that presses, crushes, or the like the interlocking material.

In at least one example, the cutting 504 includes rotating the rotary blade device 300 to cut into the interlocking material layer. The rotary blade device 300 is ultrasonically vibrated to assist the blades and/or teeth deform the interlocking material layer. The cutting 504 can include cutting into the interlocking material to different depths at different locations in the interlocking material. The cutting 504 forms spatial gaps between the interlocking elements. In at least one example, the spatial gaps are a common size throughout the interlocking material. Optionally, the spatial gaps are different sizes in different locations of the interlocking material.

In at least one example, the method also includes heating, at 506, the interlocking material during the cutting 504. For example, the heater 110 can be used to exert heat at a desired temperature to soften and/or melt at least a portion of the interlocking material.

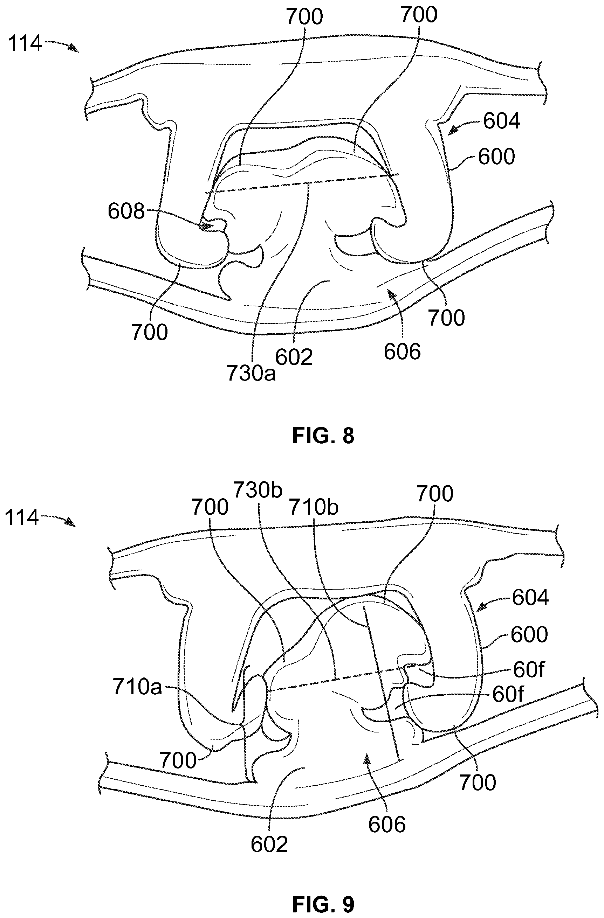

Figure 8 illustrates a first profile view of a zipper assembly 114, according to an example of the present disclosure. Figure 9 illustrates a second profile view of the zipper assembly 114 of Figure 8. Referring to Figures 1, 8, and 9, the forming unit 104 operates on the zipper assembly 114 to vibrate, cut, and heat the zipper assembly 114 to form interlocking elements 600 and 602 from interlocking material 604 and 606, respectively. The interlocking elements 600 and 602 are configured to repeatedly couple with each other and decoupled from each other.

As shown, the vibrating, cutting, and heating has deformed the interlocking elements 600 and 602 to provide various tactile features thereon. Spatial gaps 608 are formed between the interlocking elements 600 and 602. The spatial gaps 608 can be a common size through the interlocking material 604 and/or 606, or can optionally have different sizes and different locations.

Referring to Figures 6, 8, and 9, the zipper assembly 114 can be formed as described herein to have rounded bulbous heads 700, which were deformed during ultrasonic cutting of the interlocking elements. The heads 700 of the interlocking elements can be arranged in a two-dimensional array on the flange, such as shown in Figures 8 and 9, in particular. The heads 700 are thermally deformed during the ultrasonic cutting. In at least one example, different sets of the interlocking elements have one or more of different heights 710a and 710b and/or different separation distances 730a and 730b.

As described herein, embodiments of the present disclosure provide improved methods of forming a zipper assembly. Further, embodiments of the present disclosure provide a zipper assembly having tactility, as well as desired opening force.

## Claims

1. A method comprising:
obtaining an elongated zipper assembly (114) having a panel side (229) and an opposite interlocking side (231), the panel side (229) configured to be coupled with a panel of an enclosure, the interlocking side (231) having an interlocking material layer (241) extending away from the interlocking side (231);
vibrating the zipper assembly (114); and
cutting into the interlocking material layer (241) of the zipper assembly (114) while the zipper assembly (114) is vibrated to form interlocking elements (226, 230) from the interlocking material layer (241), the interlocking elements (226, 230) configured to repeatedly couple with each other and decouple from each other while coupled with the enclosure.

2. The method of claim 1, wherein vibrating the zipper assembly (114) includes moving the zipper assembly (114) back-and-forth between different positions at an ultrasonic frequency.

3. The method of claim 1, wherein cutting into the interlocking material includes rotating a rotary blade device (300) to cut into the interlocking material layer (241), or wherein cutting into the interlocking material includes cutting into the interlocking material to different depths at different locations in the interlocking material.

4. The method of claim 1, wherein cutting into the interlocking material forms spatial gaps (608) between the interlocking elements (226, 230).

5. The method of claim 4, wherein the spatial gaps (608) are a common size throughout the interlocking material, or wherein the spatial gaps (608) are different sizes in different locations of the interlocking material.

6. The method of claim 1, further comprising heating the interlocking material during cutting of the interlocking material.

7. The method of claim 1 wherein the cutting is performed using a rotary blade device (300).

8. The method of claim 7, wherein the zipper assembly (114) is vibrated at an ultrasonic frequency during cutting into the interlocking material layer (241).

9. The method of claim 7, wherein cutting into the interlocking material includes cutting into the interlocking material to different depths at different locations in the interlocking material, or wherein cutting into the interlocking material forms spatial gaps (608) between the interlocking elements.

10. The method of claim 9, wherein the spatial gaps (608) are a common size throughout the interlocking material, or wherein the spatial gaps (608) are different sizes in different locations of the interlocking material.

11. The method of claim 7, further comprising heating the interlocking material during cutting of the interlocking material.

12. A zipper assembly (114) comprising:
an elongated flange having a panel side (229) and an opposite interlocking side (231), the panel side (229) configured to be coupled with a panel of an enclosure; and
elongated interlocking elements (226, 230) coupled with the interlocking side (231) of the flange, **characterized by** the interlocking elements (226, 230) protruding away from the interlocking side (231) to rounded bulbous heads (700) deformed during ultrasonic cutting of the interlocking elements (226, 230) .

13. The zipper assembly of claim 12, wherein the heads (700) of the interlocking elements (226, 230) are rounded.

14. The zipper assembly of claim 12, wherein the heads (700) of the interlocking elements (226, 230) are arranged in a two-dimensional array on the flange, or wherein the heads (700) of the interlocking elements (226, 230) also are thermally deformed during the ultrasonic cutting.

15. The zipper assembly of claim 12, wherein different sets of the interlocking elements (226, 230) have one or more of different heights or different separation distances.

## Patentansprüche

1. Verfahren, aufweisend:
das Erhalten einer länglichen Reißverschlussbaugruppe (114) mit einer Plattenseite (229) und einer gegenüberliegenden ineinandergreifenden Seite (231), wobei die Plattenseite (229) dazu eingerichtet ist, mit einer Platte eines Gehäuses gekoppelt zu werden, wobei die ineinandergreifende Seite (231) eine ineinandergreifende Materialschicht (241) aufweist, die sich von der ineinandergreifenden Seite (231) weg erstreckt;
das Vibrieren der Reißverschlussbaugruppe (114); und
das Schneiden in die ineinandergreifende Materialschicht (241) der Reißverschlussbaugruppe (114), während die Reißverschlussbaugruppe (114) vibriert wird, um ineinandergreifende Elemente (226, 230) aus der ineinandergreifenden Materialschicht (241) zu bilden, wobei die ineinandergreifenden Elemente (226, 230) dazu eingerichtet sind, wiederholt miteinander zu koppeln und sich voneinander zu entkoppeln, während sie mit dem Gehäuse gekoppelt sind.

2. Verfahren nach Anspruch 1, wobei das Vibrieren der Reißverschlussbaugruppe (114) das Hin- und Herbewegen der Reißverschlussbaugruppe (114) zwischen verschiedenen Positionen bei einer Ultraschallfrequenz beinhaltet.

3. Verfahren nach Anspruch 1, wobei das Schneiden in das ineinandergreifende Material das Drehen einer Drehklingenvorrichtung (300) beinhaltet, um in die ineinandergreifende Materialschicht (241) zu schneiden, oder wobei das Schneiden in das ineinandergreifende Material das Schneiden in das ineinandergreifende Material bis zu verschiedenen Tiefen an verschiedenen Stellen in dem ineinandergreifenden Material beinhaltet.

4. Verfahren nach Anspruch 1, wobei das Schneiden in das ineinandergreifende Material räumliche Lücken (608) zwischen den ineinandergreifenden Elementen (226, 230) bildet.

5. Verfahren nach Anspruch 4, wobei die räumlichen Lücken (608) im gesamten ineinandergreifenden Material eine einheitliche Größe aufweisen, oder wobei die räumlichen Lücken (608) an verschiedenen Stellen des ineinandergreifenden Materials unterschiedliche Größen aufweisen.

6. Verfahren nach Anspruch 1, ferner aufweisend das Erwärmen des ineinandergreifenden Materials während des Schneidens des ineinandergreifenden Materials.

7. Verfahren nach Anspruch 1, wobei das Schneiden unter Verwendung einer Drehklingenvorrichtung (300) durchgeführt wird.

8. Verfahren nach Anspruch 7, wobei die Reißverschlussbaugruppe (114) während des Schneidens in die ineinandergreifende Materialschicht (241) bei einer Ultraschallfrequenz vibriert wird.

9. Verfahren nach Anspruch 7, wobei das Schneiden in das ineinandergreifende Material das Schneiden in das ineinandergreifende Material bis zu verschiedenen Tiefen an verschiedenen Stellen in dem ineinandergreifenden Material beinhaltet, oder wobei das Schneiden in das ineinandergreifende Material räumliche Lücken (608) zwischen den ineinandergreifenden Elementen bildet.

10. Verfahren nach Anspruch 9, wobei die räumlichen Lücken (608) im gesamten ineinandergreifenden Material eine einheitliche Größe aufweisen, oder wobei die räumlichen Lücken (608) an verschiedenen Stellen des ineinandergreifenden Materials unterschiedliche Größen aufweisen.

11. Verfahren nach Anspruch 7, ferner aufweisend das Erwärmen des ineinandergreifenden Materials während des Schneidens des ineinandergreifenden Materials.

12. Eine Reißverschlussbaugruppe (114), aufweisend:
einen länglichen Flansch mit einer Plattenseite (229) und einer gegenüberliegenden ineinandergreifenden Seite (231), wobei die Plattenseite (229) dazu eingerichtet ist, mit einer Platte eines Gehäuses gekoppelt zu werden; und
längliche ineinandergreifende Elemente (226, 230), die mit der ineinandergreifenden Seite (231) des Flansches gekoppelt sind, **dadurch gekennzeichnet, dass**
die ineinandergreifenden Elemente (226, 230), die von der ineinandergreifenden Seite (231) weg zu abgerundeten wulstförmigen Köpfen (700) vorstehen, die während des Ultraschallschneidens der ineinandergreifenden Elemente (226, 230) verformt werden.

13. Die Reißverschlussbaugruppe nach Anspruch 12, wobei die Köpfe (700) der ineinandergreifenden Elemente (226, 230) abgerundet sind.

14. Die Reißverschlussbaugruppe nach Anspruch 12, wobei die Köpfe (700) der ineinandergreifenden Elemente (226, 230) in einer zweidimensionalen Anordnung auf dem Flansch angeordnet sind, oder wobei die Köpfe (700) der ineinandergreifenden Elemente (226, 230) während des Ultraschallschneidens auch thermisch verformt werden.

15. Die Reißverschlussbaugruppe nach Anspruch 12, wobei verschiedene Gruppen der ineinandergreifenden Elemente (226, 230) eine oder mehrere unterschiedliche Höhen oder unterschiedliche Abstände aufweisen.

## Revendications

1. Procédé comprenant :
l'obtention d'un ensemble de fermeture à glissière allongé (114) ayant un côté panneau (229) et un côté d'emboîtement (231) opposé, le côté panneau (229) étant configuré pour être couplé à un panneau d'une enceinte, le côté d'emboîtement (231) ayant une couche de matériau d'emboîtement (241) s'étendant à l'écart depuis le côté d'emboîtement (231) ;
la mise en vibration de l'assemblage de fermeture à glissière (114) ; et
la découpe dans la couche de matériau d'emboîtement (241) de l'ensemble de fermeture à glissière (114) alors que l'ensemble de fermeture à glissière (114) est mis en vibration pour former des éléments d'emboîtement (226, 230) à partir de la couche de matériau d'emboîtement (241), les éléments d'emboîtement (226, 230) étant configurés pour se coupler l'un avec l'autre et se découpler l'un de l'autre de manière répétée tout en étant couplés à l'enceinte.

2. Procédé selon la revendication 1, dans lequel la mise en vibration de l'ensemble de fermeture à glissière (114) inclut un mouvement de va-et-vient de l'ensemble de fermeture à glissière (114) entre différentes positions à une fréquence ultrasonore.

3. Procédé selon la revendication 1, dans lequel la découpe dans le matériau d'emboîtement inclut la rotation d'un dispositif à lame rotative (300) pour découper dans la couche de matériau d'emboîtement (241), ou dans lequel la découpe dans le matériau d'emboîtement inclut la découpe dans le matériau d'emboîtement jusqu'à différentes profondeurs au niveau de différents emplacements dans le matériau d'emboîtement.

4. Procédé selon la revendication 1, dans lequel la découpe dans le matériau d'emboîtement forme des écarts spatiaux (608) entre les éléments d'emboîtement (226, 230).

5. Procédé selon la revendication 4, dans lequel les écarts spatiaux (608) sont d'une taille commune sur l'ensemble du matériau d'emboîtement, ou dans lequel les écarts spatiaux (608) sont de tailles différentes à différents emplacements du matériau d'emboîtement.

6. Procédé selon la revendication 1, comprenant en outre le chauffage du matériau d'emboîtement pendant la découpe du matériau d'emboîtement.

7. Procédé selon la revendication 1, dans lequel la découpe est réalisée à l'aide d'un dispositif à lame rotative (300).

8. Procédé selon la revendication 7, dans lequel l'ensemble de fermeture à glissière (114) est mis en vibration à une fréquence ultrasonore pendant la découpe dans la couche de matériau d'emboîtement (241).

9. Procédé selon la revendication 7, dans lequel la découpe dans le matériau d'emboîtement inclut la découpe dans le matériau d'emboîtement jusqu'à différentes profondeurs au niveau de différents emplacements dans le matériau d'emboîtement, ou dans lequel la découpe dans le matériau d'emboîtement forme des écarts spatiaux (608) entre les éléments d'emboîtement.

10. Procédé selon la revendication 9, dans lequel les écarts spatiaux (608) sont d'une taille commune sur l'ensemble du matériau d'emboîtement, ou dans lequel les écarts spatiaux (608) sont de tailles différentes à différents emplacements du matériau d'emboîtement.

11. Procédé selon la revendication 7, comprenant en outre le chauffage du matériau d'emboîtement pendant la découpe du matériau d'emboîtement.

12. Ensemble de fermeture à glissière (114) comprenant :
une bride allongée ayant un côté panneau (229) et un côté d'emboîtement opposé (231), le côté panneau (229) étant configuré pour être couplé à un panneau d'une enceinte ; et
des éléments d'emboîtement allongés (226, 230) couplés au côté d'emboîtement (231) de la bride, **caractérisés par** :
les éléments d'emboîtement (226, 230) faisant saillie à partir du côté d'emboîtement (231) vers des têtes (700) bulbeuses arrondies déformées pendant la découpe par ultrasons des éléments d'emboîtement (226, 230).

13. Ensemble de fermeture à glissière selon la revendication 12, dans lequel les têtes (700) des éléments d'emboîtement (226, 230) sont arrondies.

14. Ensemble de fermeture à glissière selon la revendication 12, dans lequel les têtes (700) des éléments d'emboîtement (226, 230) sont agencées en un réseau bidimensionnel sur la bride, ou dans lequel les têtes (700) des éléments d'emboîtement (226, 230) sont également déformées thermiquement pendant la découpe par ultrasons.

15. Ensemble de fermeture à glissière selon la revendication 12, dans lequel différents ensembles d'éléments d'emboîtement (226, 230) ont une ou plusieurs hauteurs différentes ou des distances de séparation différentes.
